# EUROPEAN PATENT APPLICATION

(11) **EP 4 647 909 A1**
(43) Date of publication of application: **12.11.2025**
(21) Application number: 23915382.8
(22) Date of filing: 13.01.2023
(51) Int. Cl.: G06F 9/48

(54) **STATE MANAGEMENT METHOD AND APPARATUS, AND INTELLIGENT DRIVING DEVICE**

(71) Applicant: Shenzhen Yinwang Intelligent Technologies Co., Ltd., Shenzhen, Guangdong 518110 (CN)
(72) Inventor: SU, Xuefei, Shenzhen, Guangdong 518129 (CN); XI, Zhipeng, Shenzhen, Guangdong 518129 (CN); SHEN, Xinda, Shenzhen, Guangdong 518129 (CN)
(74) Representative: MERH-IP Matias Erny Reichl Hoffmann Patentanwälte PartG mbB
(86) International application number: PCT/CN2023/072168
(87) International publication number: WO 2024/148613

(57) **Abstract**

This application provides a state management method and apparatus, and an intelligent driving device. The method includes: receiving a state switching request sent by a first service node, where the state switching request includes a target state of the first service node; determining information about an extended task based on the state switching request, where the extended task is associated with at least one other service node, and there is a dependency relationship between the at least one other service node and the target state; and controlling an action of the first service node based on the information about the extended task, where the action includes switching to the target state or maintaining a current state. The method in this application may be applied to the intelligent driving device, for example, an intelligent vehicle or an electric vehicle. When state information of all services cannot be directly obtained, state management for a service in a system may still be implemented. This helps implement decoupling between a state management framework platform and a service layer, and helps independent evolution and mutual compatibility of an intelligent driving computing platform and an intelligent driving service.

## Description

### TECHNICAL FIELD

This application relates to the field of intelligent driving, and in particular, to a state management method and apparatus, and an intelligent driving device.

### BACKGROUND

Specific service functions of an intelligent driving system are usually carried by processes responsible for different basic functions. These processes are not isolated in the system, and the processes responsible for the different basic functions need to collaborate with each other to complete a specific service function.

State management (state management, SM) is an application that is responsible for managing a system state and a service state in the intelligent driving system. The SM combines state information of all services in the intelligent driving system, to determine whether to enable or disable corresponding basic functions based on actual service scenario requirements. When the corresponding basic functions are enabled, the SM performs the corresponding basic functions based on a service process to achieve a target state and enable a target service function. However, with rapid development of an intelligent driving computing platform, services from a plurality of sources may be integrated into the intelligent driving system, and the SM may not be able to directly obtain state information of all services from different sources, or required states of services from different sources are not defined. As a result, the SM cannot effectively manage the system state or states of all services in the system.

In view of this, a state management solution in which specific state information of all services does not need to be directly obtained and sensed needs to be developed urgently.

### SUMMARY

This application provides a state management method and apparatus, and an intelligent driving device, so that when state information of all services cannot be directly obtained, state management for a service in a system can also be implemented. This helps implement decoupling between a state management framework platform and a service layer, and helps independent evolution and mutual compatibility of an intelligent driving computing platform and an intelligent driving service.

According to a first aspect, a state management method is provided. The method may be performed by an intelligent driving device, or may be performed by a computing platform of an intelligent driving device, or may be performed by a chip or a circuit used in an intelligent driving device. This is not specifically limited in this application.

The intelligent driving device in this application may include a road transportation means, a water transportation means, an air transportation means, an industrial device, an agricultural device, an entertainment device, or the like. For example, the intelligent driving device may be a vehicle. The vehicle is a vehicle in a broad sense, and may be a transportation means (for example, a commercial vehicle, a passenger vehicle, a motorcycle, a flight vehicle, or a train), an industrial vehicle (for example, a pallet truck, a trailer, or a tractor), an engineering vehicle (for example, an excavator, a bulldozer, or a crane), an agricultural device (for example, a lawn mower or a harvester), a recreational device, a toy vehicle, or the like. A type of the vehicle is not specifically limited in embodiments of this application. For another example, the intelligent driving device may be a transportation means like an airplane or a ship.

The method includes: receiving a state switching request sent by a first service node, where the state switching request includes a target state of the first service node; determining information about an extended task based on the state switching request, where the extended task is associated with at least one other service node, and there is a dependency relationship between the at least one other service node and the target state; and controlling an action of the first service node based on the information about the extended task, where the action includes switching to the target state or maintaining a current state.

In the foregoing technical solution, when state management is performed, state information of all service nodes (for example, process information corresponding to the service nodes) does not need to be directly obtained, and state management for the service nodes can be implemented. In this way, when state information of another service cannot be obtained, state management for the service node can still be completed. In addition, in the foregoing technical solution, a user is allowed to define different extended tasks based on different service requirements, so that different use scenarios and use requirements can be met, thereby helping improve user experience.

For example, the extended task includes at least one of an arbitration processing task, a pre-processing task, and a post-processing task.

For example, that the extended task is associated with the at least one other service node may include: The at least one other service node needs to execute the extended task.

For example, the first service node may have a plurality of states, and the target state is one of the plurality of states. That there is a dependency relationship between the at least one other service node and the target state may include: Before and/or after the first service node switches to the target state, the at least one other service node needs to execute the extended task.

In some possible implementations, if the extended task includes only the post-processing task, the first service node is controlled, based on the information about the extended task, to switch to the target state. Further, after the first service node switches to the target state, execution of the extended task is controlled.

With reference to the first aspect, in some implementations of the first aspect, the controlling an action of the first service node based on the information about the extended task includes: controlling execution of the extended task based on the information about the extended task; and controlling the action of the first service node based on an execution result of the extended task.

For example, the extended task includes an arbitration processing task and/or a pre-processing task.

For example, the controlling execution of the extended task includes: sending a notification to the at least one other service node, to indicate the at least one other service node to execute the extended task.

In the foregoing technical solution, the SM does not need to obtain state information of another service node, but performs state management on the first service node based on the execution result of executing the extended task by the another service node, so as to achieve an objective of decoupling state management from a service.

With reference to the first aspect, in some implementations of the first aspect, the at least one other service node includes a second service node, and the controlling execution of the extended task includes: sending first indication information to the second service node based on the information about the extended task, where the first indication information indicates the second service node to arbitrate whether the first service node is allowed to switch to the target state; and receiving an arbitration result sent by the second service node. The execution result is the arbitration result, and the controlling the action of the first service node based on an execution result of the extended task includes: when the arbitration result is that the first service node is allowed to switch to the target state, controlling the first service node to switch to the target state; or when the arbitration result is that the first service node is not allowed to switch to the target state, controlling the first service node to maintain the current state.

In the foregoing technical solution, the state of the first service node is controlled based on the arbitration result of the arbitration processing task, so that state switching of the first service node can be prevented from affecting normal running of another service node, and different use scenarios and use requirements of a user can be met.

With reference to the first aspect, in some implementations of the first aspect, the at least one other service node includes a third service node, and the controlling execution of the extended task includes: sending second indication information to the third service node based on the information about the extended task, where the second indication information indicates that the first service node is to switch to the target state, so that the third service node executes a first preset processing task; and receiving an execution result that is of the first preset processing task and that is sent by the third service node. The execution result is the execution result of the first preset processing task, and the controlling the action of the first service node based on an execution result of the extended task includes: when the execution result of the first preset processing task is a success, controlling the first service node to switch to the target state; or when the execution result of the first preset processing task is a failure, controlling the first service node to maintain the current state.

For example, the first preset processing task may include a task that needs to be processed by the third service node before the first service node is to switch to the target state. For example, when the target state is a sleep state of an intelligent driving system, the first preset processing task may be a task such as data persistence or message broadcasting.

In some possible implementations, the third service node and the second service node may be a same service node.

In some possible implementations, if a user sets that the execution result of the first preset processing task does not affect the action of the first service node, when the execution result of the first preset processing task is a failure, the first service node is controlled to switch to the target state.

In the foregoing technical solution, the state of the first service node may be controlled based on the execution result of the pre-processing task, so that different use scenarios and use requirements of the user can be met.

With reference to the first aspect, in some implementations of the first aspect, the method further includes: controlling re-execution of the extended task when the execution result is not received within preset duration.

For example, the preset duration may be 3 seconds, or may be other duration.

In the foregoing technical solution, in a process of executing the extended task, timeout monitoring is set, so that the extended task can be controlled to be re-executed, to improve a success rate of executing the extended task, ensure reliability and certainty of executing the extended task, and reduce a probability that an intelligent driving system is blocked because the execution result of the extended task cannot be obtained. In this way, development efficiency of a developer of an integrator and reliability of the intelligent driving system are improved.

With reference to the first aspect, in some implementations of the first aspect, the method further includes: when a quantity of times of executing the extended task is greater than or equal to a preset quantity of times, determining that the extended task fails to be executed.

For example, the preset quantity of execution times may be 3, or may be another quantity of times.

In the foregoing technical solution, in a process of executing the extended task, super monitoring is set, so that when a quantity of times of executing the extended task exceeds the preset quantity of times, it can be determined that the extended task fails to be executed, and then state switching or state retention is controlled based on an execution failure result, to avoid fault spreading caused by infinite re-execution.

With reference to the first aspect, in some implementations of the first aspect, the extended task includes a first extended task and a second extended task, and the controlling execution of the extended task includes: controlling the first extended task and the second extended task to be executed in a preset execution sequence.

In the foregoing technical solution, a user is allowed to define or orchestrate an execution sequence of the extended task based on an actual service requirement, so that application scenarios and use requirements of different integrators can be met.

With reference to the first aspect, in some implementations of the first aspect, the extended task includes a third extended task and a fourth extended task, and the controlling execution of the extended task includes: controlling the third extended task and the fourth extended task to be executed based on preset execution logic.

For example, the preset execution logic may include: executing the fourth extended task after the third extended task is successfully executed; or an execution result of the third extended task does not affect execution of the fourth extended task.

In the foregoing technical solution, the user is allowed to define or orchestrate execution logic of the extended task based on an actual service requirement, so that application scenarios and use requirements of different integrators can be met.

With reference to the first aspect, in some implementations of the first aspect, the at least one other service node includes a fourth service node, and after the controlling the first service node to switch to the target state, the method further includes: sending third indication information to the fourth service node based on the information about the extended task, where the third indication information indicates that the first service node has switched to the target state, so that the fourth service node executes a second preset processing task.

For example, the second preset processing task may include: after the first service node switches to the target state, a task that needs to be processed by the fourth service node. For example, when the target state is a wake-up state of the intelligent driving system, the second preset processing task may be a task such as loading and updating a data file from a persistent file.

For example, the fourth service node, the second service node, and the third service node may be a same service node, or may be different service nodes. This is not specifically limited in this embodiment of this application.

With reference to the first aspect, in some implementations of the first aspect, before the receiving a state switching request sent by a first service node, the method further includes: receiving registration information of each of the at least one other service node, where the registration information indicates an association relationship between each service node and the first service node; and generating the information about the extended task based on the registration information.

For example, the first service node may have a plurality of states, and the association relationship between each service node and the first service node may include: an association relationship between each service node and at least one of the plurality of states of the first service node, for example, one service node in each service node needs to execute one or more extended tasks before and/or after the first service node switches to one of the plurality of states.

In the foregoing technical solution, based on an execution process feature of state management for an intelligent driving service, a user is allowed to predefine one or more extended tasks and an execution condition of the extended task for one or more service nodes based on a service requirement, to abstract phased execution tasks. This can meet different use scenarios and use requirements of the user, and also help improve user experience. In addition, state management for the service node can be standardized and generalized, to decouple service function development from state management for the service nodes, and facilitate independent evolution of an intelligent driving computing platform and the intelligent driving service.

With reference to the first aspect, in some implementations of the first aspect, before the receiving a state switching request sent by a first service node, the method further includes: loading the information about the extended task through a configuration file.

According to a second aspect, a state management apparatus is provided. The apparatus includes a transceiver unit, a first determining unit, and a processing unit. The transceiver unit is configured to receive a state switching request sent by a first service node, where the state switching request includes a target state of the first service node; the first determining unit is configured to determine information about an extended task based on the state switching request, where the extended task is associated with at least one other service node, and there is a dependency relationship between the at least one other service node and the target state; and the processing unit is configured to control an action of the first service node based on the information about the extended task, where the action includes switching to the target state or maintaining a current state.

With reference to the second aspect, in some implementations of the second aspect, the processing unit is configured to: control execution of the extended task based on the information about the extended task; and control the action of the first service node based on an execution result of the extended task.

With reference to the second aspect, in some implementations of the second aspect, the at least one other service node includes a second service node, and the transceiver unit is configured to: send first indication information to the second service node based on the information about the extended task, where the first indication information indicates the second service node to arbitrate whether the first service node is allowed to switch to the target state; and receive an arbitration result sent by the second service node. The execution result is the arbitration result, and the processing unit is configured to: when the arbitration result is that the first service node is allowed to switch to the target state, control the first service node to switch to the target state; or when the arbitration result is that the first service node is not allowed to switch to the target state, control the first service node to maintain the current state.

With reference to the second aspect, in some implementations of the second aspect, the at least one other service node includes a third service node, and the transceiver unit is configured to: send second indication information to the third service node based on the information about the extended task, where the second indication information indicates that the first service node is to switch to the target state, so that the third service node executes a first preset processing task; and receive an execution result that is of the first preset processing task and that is sent by the third service node. The execution result is the execution result of the first preset processing task, and the processing unit is configured to: when the execution result of the first preset processing task is a success, control the first service node to switch to the target state; or when the execution result of the first preset processing task is a failure, control the first service node to maintain the current state.

With reference to the second aspect, in some implementations of the second aspect, the processing unit is further configured to control re-execution of the extended task when the execution result is not received within preset duration.

With reference to the second aspect, in some implementations of the second aspect, the apparatus further includes a second determining unit, and the second determining unit is configured to: when a quantity of times of executing the extended task is greater than or equal to a preset quantity of times, determine that the extended task fails to be executed.

With reference to the second aspect, in some implementations of the second aspect, the extended task includes a first extended task and a second extended task, and the processing unit is configured to: control the first extended task and the second extended task to be executed in a preset execution sequence.

With reference to the second aspect, in some implementations of the second aspect, the extended task includes a third extended task and a fourth extended task, and the processing unit is configured to: control the third extended task and the fourth extended task to be executed based on preset execution logic.

With reference to the second aspect, in some implementations of the second aspect, the at least one other service node includes a fourth service node, and after the processing unit controls the first service node to switch to the target state, the transceiver unit is further configured to: send third indication information to the fourth service node based on the information about the extended task, where the third indication information indicates that the first service node has switched to the target state, so that the fourth service node executes a second preset processing task.

With reference to the second aspect, in some implementations of the second aspect, the apparatus further includes a generation unit, and the transceiver unit is further configured to: before receiving the state switching request sent by the first service node, receive registration information of each of the at least one other service node, where the registration information indicates an association relationship between each service node and the first service node; and the generation unit is configured to generate the information about the extended task based on the registration information.

With reference to the second aspect, in some implementations of the second aspect, the processing unit is further configured to: before receiving the state switching request sent by the first service node, load the information about the extended task through a configuration file.

According to a third aspect, a state management apparatus is provided. The apparatus includes: a memory, configured to store a computer program; and a processor, configured to execute the computer program stored in the memory, so that the apparatus performs the method in any possible implementation of the first aspect.

According to a fourth aspect, an in-vehicle computing platform is provided. The in-vehicle computing platform includes the apparatus in any possible implementation of the second aspect or the third aspect.

For example, the in-vehicle computing platform in this application may include at least one of an autonomous driving domain controller (advanced driving domain controller, ADC), which is also referred to as a mobile data center (mobile data center, MDC); a vehicle domain controller (vehicle domain controller, VDC); and a chassis domain controller (chassis domain controller, CDC). Alternatively, the in-vehicle computing platform may further include another computing platform, for example, an in-car application service (in-car application server, ICAS) controller, a body domain controller (body domain controller, BDC), a special equipment system (special equipment system, SAS), a media graphics unit (media graphics unit, MGU), a body super core (body super core, BSC), or an ADAS super core (ADAS super core). This is not limited in this application. The ICAS may include at least one of the following: a vehicle control server ICAS 1, an intelligent driving server ICAS 2, an intelligent cockpit server ICAS 3, and an information entertainment server ICAS 4.

According to a fifth aspect, an intelligent driving device is provided. The intelligent driving device includes the apparatus in any possible implementation of the second aspect or the third aspect, or the in-vehicle computing platform in any possible implementation of the fourth aspect.

With reference to the fifth aspect, in some implementations of the fifth aspect, the intelligent driving device is a vehicle.

According to a sixth aspect, a computer program product is provided. The computer program product includes computer program code. When the computer program code is run on a computer, the computer is enabled to perform the method in any possible implementation of the first aspect.

It should be noted that all or some of the computer program code may be stored in a first storage medium. The first storage medium may be encapsulated together with a processor, or may be encapsulated separately from a processor.

According to a seventh aspect, a computer-readable medium is provided. The computer-readable medium stores instructions, and when the instructions are executed by a processor, the processor is enabled to implement the method in any possible implementation of the first aspect.

According to an eighth aspect, a chip is provided. The chip includes a circuit, and the circuit is configured to perform the method in any possible implementation of the first aspect.

### BRIEF DESCRIPTION OF DRAWINGS

FIG. 1 is a diagram of a mapping relationship between a function group state and a process;
FIG. 2 is a functional block diagram of an intelligent driving device according to an embodiment of this application;
FIG. 3 is a diagram of a system framework according to an embodiment of this application;
FIG. 4 is a schematic flowchart of a state management method according to an embodiment of this application;
FIG. 5(a) to FIG. 5(d) are another schematic flowchart of a state management method according to an embodiment of this application;
FIG. 6 is a diagram of execution logic of a state management method according to an embodiment of this application;
FIG. 7 is a block diagram of a state management apparatus according to an embodiment of this application; and
FIG. 8 is another block diagram of a state management apparatus according to an embodiment of this application.

### DESCRIPTION OF EMBODIMENTS

In descriptions of embodiments of this application, unless otherwise specified, "/" indicates "or". For example, A/B may indicate A or B. In this specification, "and/or" describes an association relationship between associated objects and indicates that three relationships may exist. For example, A and/or B may indicate the following three cases: Only A exists, both A and B exist, and only B exists. In this application, at least one means one or more, and a plurality of means two or more. "At least one item (piece) of the following" or a similar expression thereof means any combination of these items, including a singular item (piece) or any combination of plural items (pieces). For example, at least one item (piece) of a, b, or c may indicate: a, b, c, a and b, a and c, b and c, or a, b, and c, where a, b, and c may be singular or plural.

Prefix words "first", "second", and the like in embodiments of this application are merely intended to distinguish between different described objects, and impose no limitation on locations, sequences, priorities, quantities, content, or the like of the described objects. In embodiments of this application, modifiers such as an ordinal number used to distinguish between the described objects do not constitute any limitation on the described objects. For descriptions of the described objects, refer to descriptions of the context in the claims or embodiments. The modifiers should not constitute any unnecessary limitation.

To facilitate understanding of solutions in embodiments of this application, concepts in this application are first described.

### 1. Intelligent driving service (hereinafter referred to as a service)

In an intelligent driving operating system, a service is usually a set of processes and threads that are encapsulated by using a communication middleware and that have a specific intelligent driving function. The communication middleware may be a robot operating system (robot operating system, ROS), an automotive open system architecture communication management (automotive open system architecture communication management, AUTOSAR CM) module, or the like. The intelligent driving function may be functions such as vehicle environment sensing, sensor fusion, and path planning.

### 2. Service node

A service node is an abstract concept of a single service. Two or more parties of a service node implement transfer of a message or a service between a process or a component by invoking an application programing interface (application programming interface, API), for example, a message sending interface or a message receiving interface of a communication middleware. One service node may execute one or more tasks to implement a specific intelligent driving function. In some possible implementations, one service node may be one application.

### 3. Task

A task is an activity completed by software or a series of operations performed to achieve a specific purpose.

### 4. Process (process)

A process is an instance of execution of a program in a computer, is a basic unit for a system to allocate and schedule a resource, and is a basis of an operating system structure. In an early process-oriented computer architecture, the process is a basic execution entity of a program. In a modern thread-oriented computer architecture, the process is a container for threads.

### 5. Function group

A function group is a set of processes that require a collaborative operation. Different processes in the function group implement different service states through running. Each time a state of the function group changes, an intelligent driving computing platform starts and/or stops one or more services. In addition, a service may be associated with a state of one or more function groups.

### 6. Service function

The service function is a specific intelligent driving function implemented by a service. State switching of the function group may be used to enable or disable the service function.

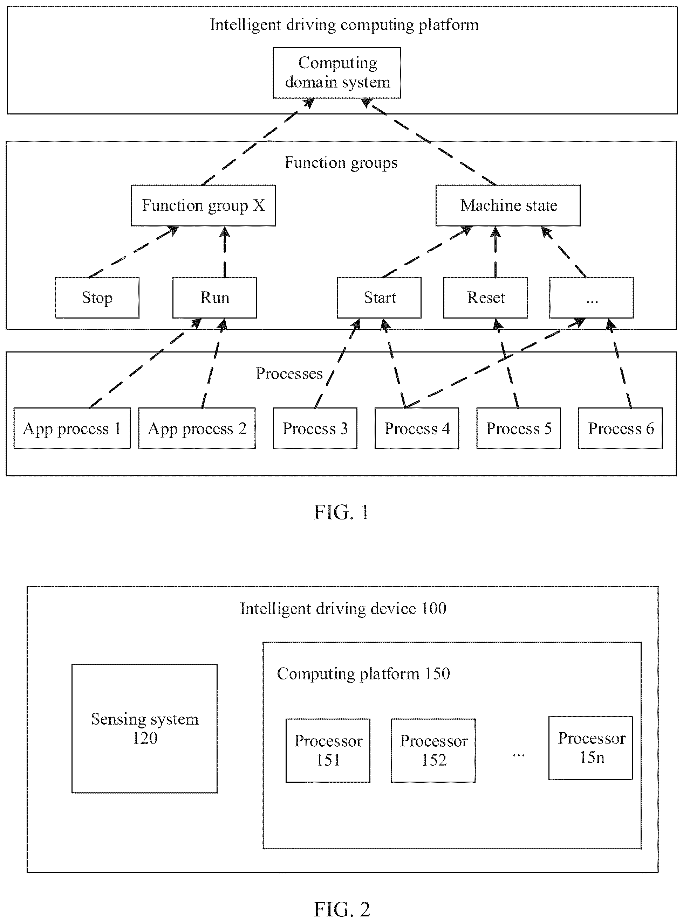

FIG. 1 shows a mapping relationship between a state of a function group and a process. A function group X (Function Group X) and a machine state (Machine State) represent two function group instances. The function group X is associated with a service function defined by a user, and the machine state is a service function defined by a computing platform. "Stop" and "Run" are two states of the function group X. "Start" and "Reset" are two states of the machine state. The machine state may further have another state, and the another state is represented by "..." Further, when the function group X is in the "Run" state, an "app process 1" and an "app process 2" are run. When the machine state is the "Start" state, a "process 3" and a "process 4" are run. When the machine state is the "Reset" state, a process 5 is run. When the machine state is in the "..." state, the process 4 and a process 6 are run. The SM controls state switching of a function group in a computing domain system, to control different processes to be started and/or stopped in a coordinated manner, so as to enable or disable a corresponding service function. It should be understood that the SM is also a process running in the computing domain system.

In a current technical background, an integrator usually designs and develops state management for an entire intelligent driving system. Based on service processing processes in different intelligent driving scenarios, the integrator combines and integrates processes of providers and design interaction processing logic between the processes. With rapid development of an intelligent driving computing platform, some integrators choose to design and develop an intelligent driving system on an intelligent driving computing platform provided by a provider. However, the intelligent driving computing platform provided by the provider may not sense state information of a service node from another source other than the intelligent driving computing platform. Alternatively, due to information security, the integrator does not share the state information of the service node with the provider. Consequently, the SM may not be able to obtain state information of all service nodes. For example, the SM cannot determine which processes corresponding to a specific service node are in a running state, and therefore cannot effectively manage a system state or states of all the service nodes in the system.

In view of this, embodiments of this application provide a state management method and apparatus, and an intelligent driving device. Information about an extended task is registered or loaded in SM in advance, and the information about the extended task indicates a dependency relationship between a first state of a first service node and another service node. When a request for switching the first service node to the first state is received, related indication information is sent to the another service node based on the information about the extended task, so that the another service node executes an arbitration processing task and/or a pre-processing task. Further, the first service node may be further controlled, based on an execution result that is of the extended task and that is fed back by the another service node, to perform state switching or state maintaining. After performing state switching, the first service node may further send indication information to a service node that has a post-processing requirement, to indicate the service node to execute a post-processing task, so as to implement state management on the first service node and the another service node. It can be learned that, when performing state management, the SM can implement decoupling between the SM or a framework platform and a service layer without directly obtaining the state information of all the service nodes. This facilitates migration of a state management framework platform, and helps independent evolution and mutual compatibility of the intelligent driving computing platform and an intelligent driving service.

The following describes technical solutions of embodiments in this application with reference to accompanying drawings.

FIG. 2 is a functional block diagram of an intelligent driving device according to an embodiment of this application. As shown in FIG. 2, the intelligent driving device 100 may include a sensing system 120 and a computing platform 150. The sensing system 120 may include several sensors configured to sense information about an environment around the intelligent driving device 100. For example, the sensing system 120 may include a positioning system. The positioning system may be a global positioning system (global positioning system, GPS), a BeiDou system, or another positioning system. For another example, the sensing system 120 may further include one or more of an inertial measurement unit (inertial measurement unit, IMU), a radar, a lidar, a millimeter-wave radar, an ultrasonic radar, and a camera apparatus.

Some or all functions of the intelligent driving device 100 may be controlled by the computing platform 150. The computing platform 150 may include processors 151 to 15n, and the processor is a circuit that has a signal processing capability. In an implementation, the processor may be a circuit that has instruction reading and running capabilities, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function based on a logical relationship of a hardware circuit, and the logical relationship of the hardware circuit is fixed or reconfigurable. For example, the processor is an application-specific integrated circuit (application-specific integrated circuit, ASIC), a programmable logic device (programmable logic device, PLD), or a field programmable gate array (field programmable gate array, FPGA). In the reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 150 may further include a memory. The memory is configured to store instructions. Some or all of the processors 151 to 15n may invoke the instructions in the memory, to implement a corresponding function.

The computing platform 150 of the intelligent driving device 100 may include an advanced driving assistant system (advanced driving assistant system, ADAS). The ADAS obtains information around the intelligent driving device by using a plurality of sensors (including but not limited to a lidar, a millimeter-wave radar, a camera apparatus, an ultrasonic sensor, a global positioning system, and an inertial measurement unit) on the intelligent driving device, and analyzes and processes the obtained information, to implement service functions such as obstacle sensing, target recognition, intelligent driving device positioning, path planning, and driver monitoring/reminding, so as to improve driving safety, automation, and comfort of the intelligent driving device.

In a specific implementation process, the computing platform 150 may be required to implement a user-defined service function in addition to a service function defined by the computing platform. As described above, the service function may be enabled or disabled through controlling of state switching of a function group.

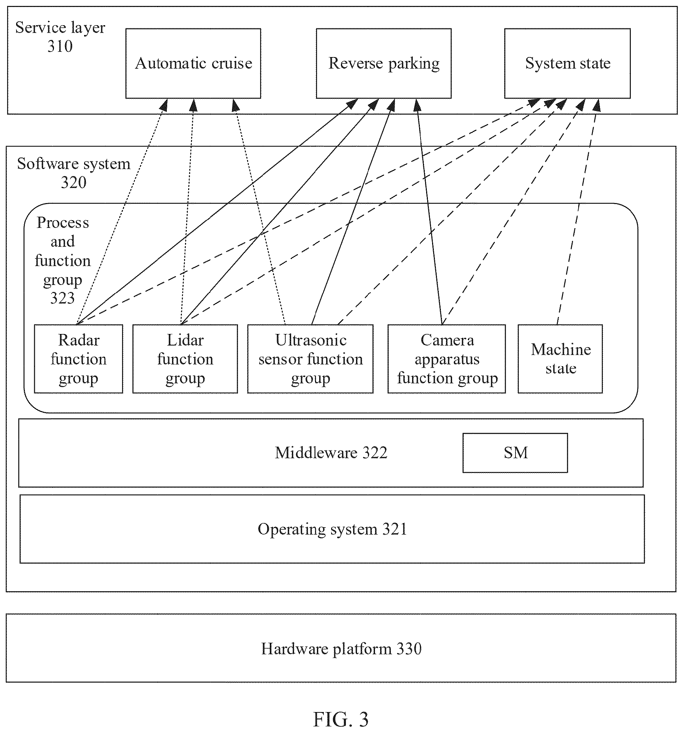

FIG. 3 is a block diagram of a system architecture according to an embodiment of this application. The system architecture 300 may include a service layer 310, a software system 320, and a hardware platform 330.

The service layer 310 may include one or more service nodes, for example, automatic cruise, reverse parking, and a system state.

The software system 320 includes an operating system 321, a middleware 322, and a process and function group 323. The middleware 322 is provided with SM, and implements state management on one or more service nodes at the service layer 310 by controlling state switching of one or more function groups in the process and function group 323. The operating system 321 runs on the hardware platform 330, and may perform resource scheduling based on a process actually running in the process and function group 323 or an actual requirement of the service layer 310 during running. The service layer 310 obtains, by using the operating system 321, resources such as computing power, memory, communication, storage, and sensing that are required during running.

For example, the process and function group 323 may include one or more function groups, such as a radar function group (Radar access), a lidar function group (Lidar access), an ultrasonic sensor function group (USS access), a camera apparatus function group (Camera access), and a machine state (Machine state). The one or more function groups may include a user-defined function group, or may include a function group defined by a platform that is provided by a provider. For example, the foregoing function groups may correspond to the sensors in the sensing system 120 shown in FIG. 2. For example, the lidar function group corresponds to a lidar, and is configured to control a state of the lidar. The rest may be deduced by analogy.

For example, an association relationship between each function group in the software system 320 and each service node at the service layer 310 is shown in FIG. 3. When state switching is performed for an automatic cruise service, the SM needs to control state switching of the radar function group, the lidar function group, and the ultrasonic sensor function group. When state switching is performed for a reverse parking service, the SM needs to control state switching of the radar function group, the lidar function group, the ultrasonic sensor function group, and the camera apparatus function group. When state switching is performed for a system state service, the SM needs to control state switching of the machine state, the radar function group, the lidar function group, the ultrasonic sensor function group, and the camera apparatus function group.

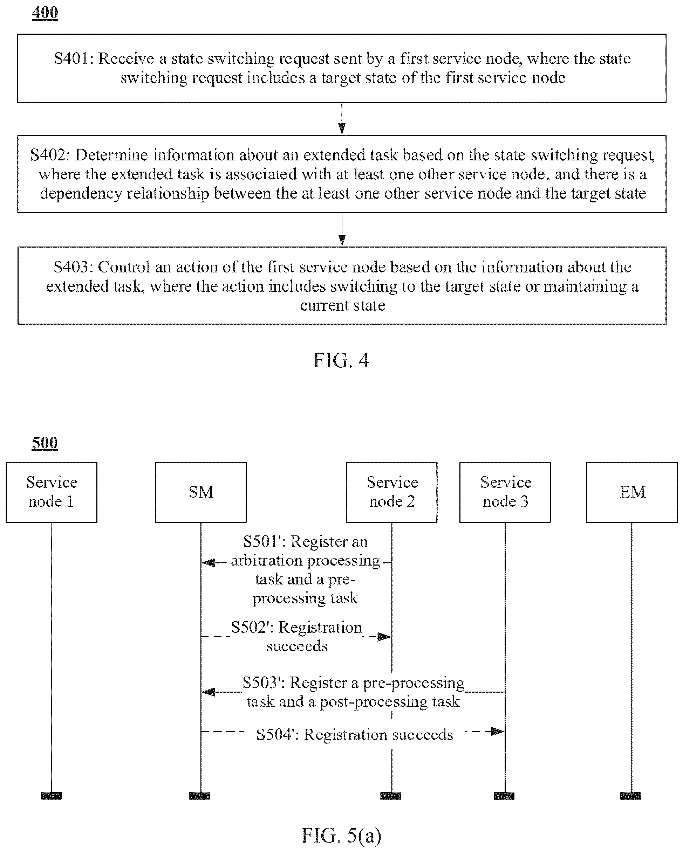

FIG. 4 is a schematic flowchart of a state management method according to an embodiment of this application. The method 400 may be performed by a computing platform used in an intelligent driving device, or may be performed by a chip used on a computing platform. For example, the method 400 may be performed by the computing platform 150 shown in FIG. 2, or may be performed by the middleware 322 shown in FIG. 3. The following describes the method 400 by using an example in which the computing platform performs the method 400. The method 400 may include S401 to S403.

S401: Receive a state switching request sent by a first service node, where state switching request information includes a target state of the first service node.

For example, the first service node may be one of the automatic cruise, the reverse parking, and the system state in the foregoing embodiments, or the first service node may be a service node configured to implement another function.

S402: Determine information about an extended task based on the state switching request information, where the extended task is associated with at least one other service node, and there is a dependency relationship between the at least one other service node and the target state.

For example, the extended task may be a task that needs to be executed by the at least one other service node before and/or after the first service node switches to the target state, for example, may include at least one of an arbitration processing task, a pre-processing task, and a post-processing task. Specifically, the arbitration processing task is a task to arbitrate whether state switching of a service node is allowed to be executed. The pre-processing task is a processing task that needs to be executed by a current service node before state switching of a specific service node is performed. The post-processing task is a processing task that needs to be executed by a current service node after state switching of a specific service node is performed.

For example, the extended task may be registered by the at least one other service node, or may be determined by loading a static configuration file.

S403: Control an action of the first service node based on the information about the extended task, where the action includes switching to the target state or maintaining a current state.

For example, if the extended task includes the arbitration processing task and/or the pre-processing task, the first service node is controlled, based on an execution result of the arbitration processing task and/or an execution result of the pre-processing task, to switch to the target state or to maintain the current state.

For example, if the extended task includes only the post-processing task, the first service node is controlled to switch to the target state. Further, the at least one other service node is controlled to execute the post-processing task.

According to the state management method provided in this embodiment of this application, when performing state management, SM can implement state management for service nodes without directly obtaining state information of all service nodes. This helps decouple a state management framework platform from a service layer, facilitates migration of the state management framework platform, and helps independent evolution and mutual compatibility of the intelligent driving computing platform and an intelligent driving service. In addition, according to the state management method provided in this embodiment of this application, a user is allowed to define different extended tasks based on different service requirements, so that different use scenarios and use requirements can be met, thereby helping improve user experience.

FIG. 5(a) to FIG. 5(d) are a schematic flowchart of a state management method according to an embodiment of this application. The method 500 is an extension of the method 400. For example, the method 500 may be performed in parallel with the method 400, or may be performed after the method 400. For example, the method 500 may be performed by a computing platform used in an intelligent driving device, or may be performed by a chip used on a computing platform. The following describes the method 500 by using an example in which the computing platform performs the method 500. The method 500 may include S501 to S517, or may further include S501' to S504'.

For example, service nodes 1 to 3, SM, and execution management (execution management, EM) shown in FIG. 5(a) to FIG. 5(d) are all services running in an intelligent driving system. After the intelligent driving system is started, the service nodes 1 to 3 register different extended tasks with the SM based on function requirements. The extended task may include the extended task in the method 400. Further, when receiving a state switching request of any service node, the SM sends a notification to a related service node based on the state switching request and an extended task registered by the SM, so that the related service node executes a corresponding extended task.

For example, as shown in FIG. 5(a) (referred to as FIG. 5a below), a process in which the service node registers the extended task with the SM may include S501' to S504'.

S501': The service node 2 registers an arbitration processing task and a pre-processing task with the SM.

For example, when an intelligent driving service is running, it should not be allowed to request the intelligent driving system to enter an upgrade state. It is assumed that the service node 2 is an intelligent driving service node, and the service node 2 registers an arbitration processing task with the SM, where the arbitration processing task is: Before the intelligent driving system is upgraded, the service node 2 needs to arbitrate whether the intelligent driving system can be upgraded. In this case, before controlling to switch a state of the intelligent driving system to the upgrade state, the SM queries the service node 2 whether this state switching action is allowed to be performed. If the service node 2 does not allow the state switching action to be performed through arbitration, the SM directly interrupts a processing process of the state switching request. The SM continues a subsequent process until the service node 2 allows the execution through arbitration.

For example, before the intelligent driving system switches from a running state to a sleep state, the service node 2 needs to implement data persistence or execute another processing task, for example, message broadcasting. In this case, the service node 2 may register a pre-processing task with the SM, where the pre-processing task is: Before the intelligent driving system is in sleep, the service node 2 needs to perform data persistence processing and message broadcasting.

S502': The SM sends a registration success notification to the service node 2.

S503': The service node 3 registers a pre-processing task and a post-processing task with the SM.

For example, before the intelligent driving system switches from a sleep state to a wake-up state, the service node 3 needs to execute some processing tasks. In this case, the service node 3 may register a pre-processing task with the SM, where the pre-processing task is: Before the intelligent driving system is woken up, the service node 3 needs to perform some processing tasks.

For example, after the intelligent driving system switches from the sleep state to the wake-up state, the service node 3 needs to load an updated data file from a persistent file. In this case, the service node 3 may register a post-processing task with the SM, where the post-processing task is: After the intelligent driving system is woken up, the service node 3 needs to load an updated data file from the persistent file.

S504': The SM sends a registration success notification to the service node 3.

It should be understood that a registration process shown in S501' to S504' is merely an example for description. In a specific implementation process, more or fewer service nodes may register an extended task with the SM, and each service node may register one or more extended tasks.

When the method shown in FIG. 5a is combined with the method 400, the method shown in FIG. 5a may be summarized as: receiving registration information of each of the at least one other service node, where the registration information indicates an association relationship between each service node and the first service node; and generating information about the extended task based on the registration information.

In some possible implementations, the extended task may alternatively be configured through a configuration file. In an SM running phase, the SM reads a static configuration item and loads a related extended task.

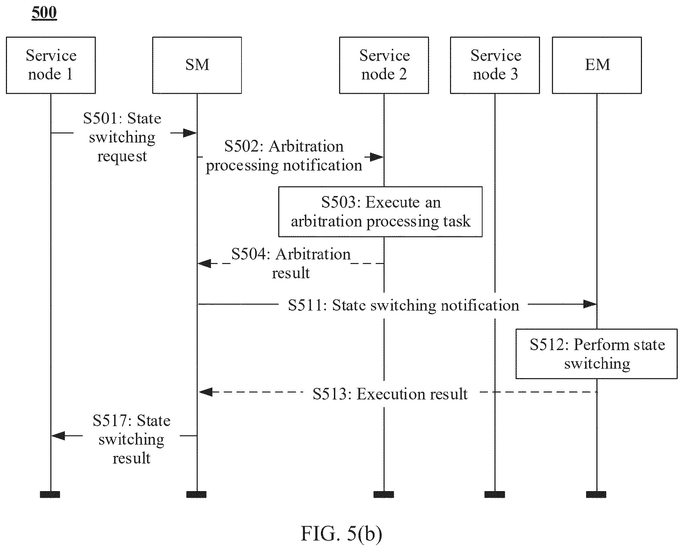

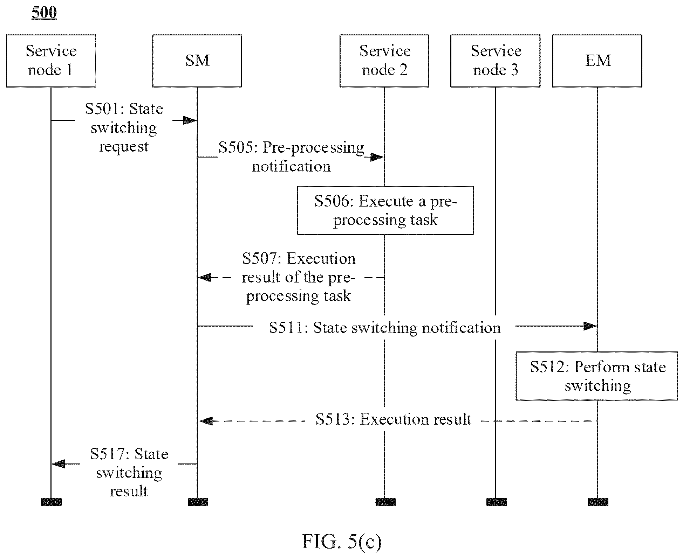

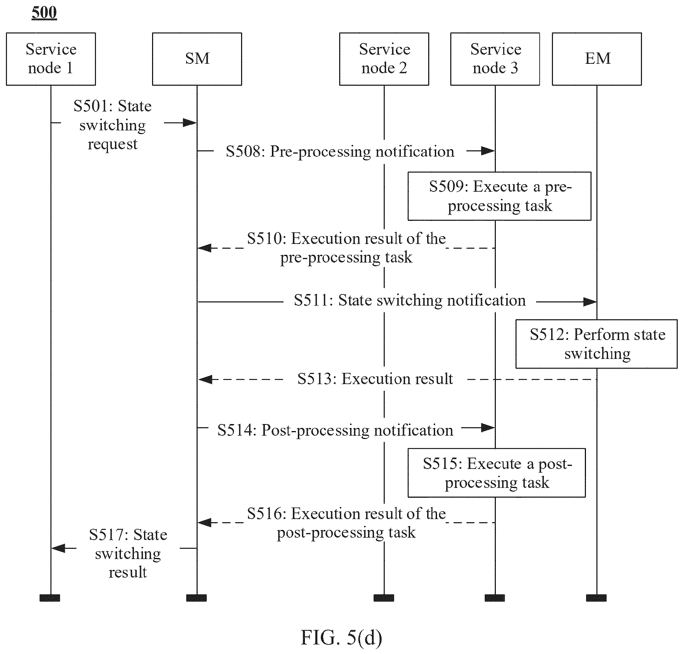

After the SM loads or registers the extended task, the SM determines the information about the extended task based on the state switching request received from the first service node, and further controls an action of the first service node based on the information about the extended task. Details are shown in FIG. 5(b) to FIG. 5(d) (referred to as FIG. 5b, FIG. 5c, and FIG. 5d below). The service node 1 may be an example of the first service node in the method 400, the service node 2 may be an example of the at least one other service node in the method 400, and the service node 3 may be another example of the at least one other service node in the method 400.

In some possible implementations, the controlling an action of the first service node based on the information about the extended task includes: controlling execution of the extended task based on the information about the extended task; and controlling the action of the first service node based on an execution result of the extended task.

The controlling execution of the extended task may include: sending a notification to the at least one other service node, so that the at least one other service node executes the extended task. For example, the "notification" may include an arbitration processing notification and/or a pre-processing notification.

In an example, as shown in FIG. 5b, the state management method provided in this embodiment includes the following steps.

S501: The service node 1 sends a state switching request to the SM.

For example, the state switching request may be an example of the state switching request in the method 400.

S502: The SM sends an arbitration processing notification to the service node 2.

For example, if the state switching request is used to request an intelligent driving system to enter an upgrade state, the SM sends the arbitration processing notification to the service node 2, so that the service node 2 arbitrates whether the intelligent driving system can enter the upgrade state.

S503: The service node 2 executes an arbitration processing task.

S504: The service node 2 sends an arbitration result to the SM.

If the service node 2 is in a running state, the arbitration result is that the intelligent driving system is not allowed to enter the upgrade state. Further, the SM controls the service node 1 to maintain a current state.

If the service node 2 is not in the running state, the arbitration result is that the intelligent driving system is allowed to enter the upgrade state. Further, the SM determines whether the SM registers another arbitration processing task or another pre-processing task. If the SM does not registered the another arbitration processing task or another pre-processing task, S511 to S513 are performed.

S511: The SM sends a state switching notification to the EM.

S512: The EM performs state switching.

For example, the EM controls a state of a function group corresponding to the service node 1 to be switched, to enable a state of the service node 1 to be switched to a target state.

S513: The EM sends an execution result to the SM.

For example, the execution result may notify the SM that the state of the service node 1 has been switched to the target state requested by the service node 1.

S517: The SM sends a state switching result to the service node 1.

For example, if the SM determines that the service node 1 does not register another post-processing task, the SM notifies the service node 1 that state switching is completed.

When the method shown in FIG. 5b is combined with the method 400, the method shown in FIG. 5b may be summarized as: sending first indication information to a second service node based on the information about the extended task, where the first indication information indicates the second service node to arbitrate whether the first service node is allowed to switch to the target state; and receiving an arbitration result sent by the second service node. The execution result is the arbitration result, and the controlling the action of the first service node based on an execution result of the extended task includes: when the arbitration result is that the first service node is allowed to switch to the target state, controlling the first service node to switch to the target state; or when the arbitration result is that the first service node is not allowed to switch to the target state, controlling the first service node to maintain the current state.

In another example, as shown in FIG. 5c, the following steps are included.

S501: The service node 1 sends a state switching request to the SM.

S505: The SM sends a pre-processing notification to the service node 2.

For example, if the state switching request is used to request an intelligent driving system to enter a sleep state, because the SM does not register an arbitration processing task associated with the sleep state of the intelligent driving system, and registers only a pre-processing task, the SM sends a pre-processing notification to the service node 2, so that the service node 2 completes the pre-processing task before the state switching, for example, performs data persistence processing and message broadcasting.

S506: The service node 2 executes the pre-processing task.

S507: The service node 2 sends an execution result of the pre-processing task to the SM.

If the service node 2 executes the pre-processing task and the pre-processing task is executed completely, the service node 2 sends an execution success notification of the pre-processing task to the SM.

If the service node 2 executes the pre-processing task and the pre-processing task fails to be executed, the service node 2 sends an execution failure notification of the pre-processing task to the SM.

In some possible implementations, if the failure of execution of the pre-processing task does not affect a subsequent processing process, the SM determines whether the SM registers another pre-processing task. If the SM does not register the another pre-processing task, S511 to S513 and S517 are performed, that is, state switching continues to be performed, to notify the service node 1 of a state switching result.

In some possible implementations, if the failure of execution of the pre-processing task affects a subsequent processing process, the SM interrupts execution of the subsequent process, and controls the service node 1 to maintain a current state.

When the method shown in FIG. 5c is combined with the method 400, the method shown in FIG. 5c may be summarized as follows: sending second indication information to a third service node based on the information about the extended task, where the second indication information indicates that the first service node is to switch to the target state, so that the third service node executes a first preset processing task; and receiving an execution result that is of the first preset processing task and that is sent by the third service node. The execution result is the execution result of the first preset processing task, and the controlling the action of the first service node based on the execution result of the extended task includes: when the execution result of the first preset processing task is a success, controlling the first service node to switch to the target state; or when the execution result of the first preset processing task is a failure, controlling the first service node to maintain the current state.

It may be understood that the third service node and the second service node may be a same service node, or may be different service nodes.

In still another example, as shown in FIG. 5d, the following steps are included.

S501: The service node 1 sends a state switching request to the SM.

S508: The SM sends a pre-processing notification to a service node 3.

For example, if the state switching request is used to request an intelligent driving system to enter a wake-up state, because the SM does not register an arbitration processing task associated with the wake-up state of the intelligent driving system, and registers only a pre-processing task and a post-processing task, the SM first sends a pre-processing notification to the related service node (namely, the service node 3).

S509: The service node 3 executes the pre-processing task.

S510: The service node 3 sends an execution result of the pre-processing task to the SM.

If the service node 3 executes the pre-processing task and the pre-processing task is executed completely, the service node 3 sends an execution success notification of the pre-processing task to the SM.

If the service node 3 executes the pre-processing task and the pre-processing task fails to be executed, the service node 3 sends an execution failure notification of the pre-processing task to the SM.

In some possible implementations, if the failure of execution of the pre-processing task does not affect a subsequent processing process, the SM determines whether the SM has registered a pre-processing task. If the SM does not register the another pre-processing task, S511 to S513 are performed.

In some possible implementations, if the failure of execution of the pre-processing task affects a subsequent processing process, the SM interrupts execution of the subsequent process, and controls the service node 1 to maintain a current state.

S511: The SM sends a state switching notification to the EM.

S512: The EM performs state switching.

For example, the EM controls a state of a function group corresponding to the service node 1 to be switched, to enable a state of the service node 1 to be switched to a target state.

S513: The EM sends an execution result to the SM.

For example, the execution result may notify the SM that the state of the service node 1 has been switched to the target state requested by the service node 1.

S514: The SM sends a post-processing notification to the service node 3.

For example, after determining that state switching succeeds, the SM indicates the service node 3 to execute a post-processing task, for example, load an updated data file from a persistent file.

S515: The service node 3 executes the post-processing task.

S516: The service node 3 sends an execution result of the post-processing task to the SM.

If the service node 3 executes the post-processing task and the post-processing task is executed completely, the service node 3 sends an execution success notification of the post-processing task to the SM.

If the service node 3 executes the post-processing task and the post-processing task fails to be executed, the service node 3 sends an execution failure notification of the post-processing task to the SM.

It should be understood that whether the post-processing task is successfully executed does not affect state switching of the service node 1.

Further, after receiving the execution result of the post-processing task, the SM performs S517 to notify the service node 1 of a state switching result.

When the method shown in FIG. 5d is combined with the method 400, S514 to S516 may be summarized as follows: after controlling the first service node to switch to the target state, sending third indication information to the fourth service node based on the information about the extended task, where the third indication information indicates that the first service node has switched to the target state, so that the fourth service node executes a second preset processing task.

It may be understood that the fourth service node, the third service node, and the second service node may be a same service node, or may be different service nodes.

It should be understood that the state management methods shown in FIG. 5b, FIG. 5c, and FIG. 5d are merely examples for description. In a specific implementation process, after the SM receives a state switching request of a specific service node, the SM may control execution of only one extended task, or the SM may control execution of two or more extended tasks, and a quantity and a type of the extended tasks controlled by the SM to be executed are determined based on the registered extended tasks.

As described above, in the SM, for same state switching, a plurality of service nodes may register an extended task, and each service node may register a plurality of extended tasks. For example, to switch the intelligent driving system to the sleep state, the service node 4, the service node 5, the service node 6, and the like may separately register, with the SM, one or more extended tasks: app4_task1, app4_task2, app5_task1, ..., app6_task1, and the like.

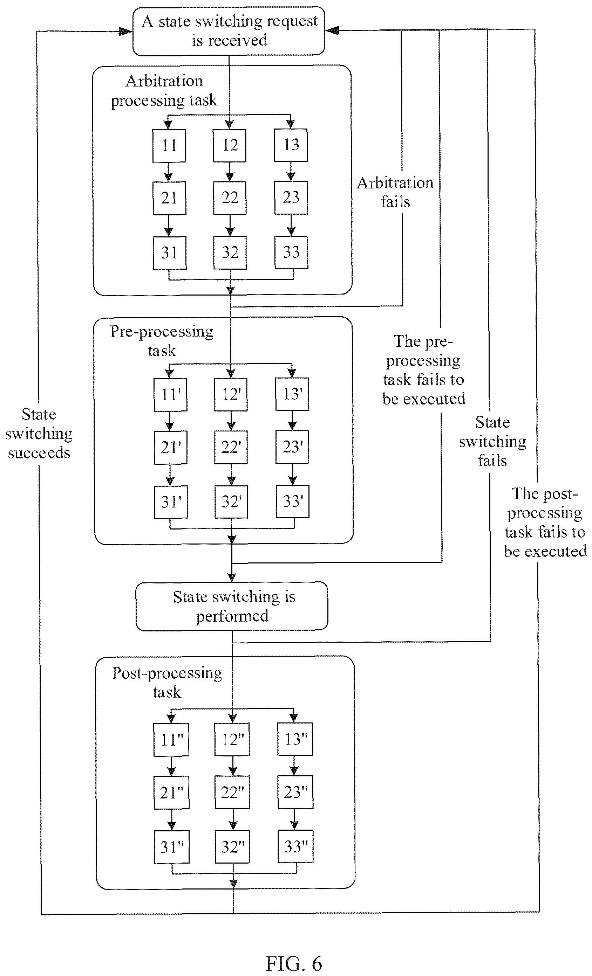

As shown in FIG. 6, when same state switching is associated with a plurality of extended tasks, for example, associated with a plurality of tasks of arbitration processing, pre-processing, and post-processing, the SM first controls execution of the arbitration processing tasks. The SM controls execution of the pre-processing tasks after all the arbitration processing tasks (for example, 11 to 33) are executed; and performs state switching after all the pre-processing tasks (for example, 11' to 33') are executed. After state switching is completed, the SM controls execution of the post-processing tasks (for example, 11" to 33").

In some possible implementations, when same state switching is associated with a plurality of extended tasks, an execution sequence and execution logic of the plurality of extended tasks may be orchestrated, to improve service processing flexibility.

For example, for extended tasks of a same type, a parallel or serial execution sequence may be predefined. For example, as shown in FIG. 6, nine extended tasks, namely, 11, 21, 31, 12, 22, 32, 13, 23, and 33, have been loaded in or registered with the SM. In this case, it may be preset that three extended tasks 11, 21, and 31 (or 12, 22, and 32; or 13, 23, and 33) need to be executed in sequence, that is, a next extended task is executed only after a previous extended task is executed. However, an execution sequence of the three groups of tasks (11, 21, 31), (12, 22, 32), and (13, 23, 33) does not need to be ensured, and the three groups of tasks may be executed in parallel to improve execution efficiency.

When the foregoing example is combined with the method 400, the foregoing example may be summarized as follows: The extended task includes a first extended task and a second extended task, and the controlling execution of the extended task includes: controlling the first extended task and the second extended task to be executed in a preset execution sequence.

For example, a logical dependency relationship between extended tasks may be further predefined. For example, execution of an extended task depends on successful execution of a previous extended task. The extended tasks 11, 21, and 31 are still used as an example. In an example, if it is predefined that an execution condition of 21 depends on successful execution of 11, and an execution condition of 31 depends on successful execution of 21, when 11 fails to be executed, subsequent execution of the task is interrupted, and it is determined that some of the arbitration processing tasks fail to be executed. In another example, if it is predefined that execution results of 11, 21, and 31 do not affect execution of subsequent extended tasks, when execution of 11, 21, and 31 is completed, the subsequent extended tasks continue to be executed regardless of whether the execution succeeds.

When the foregoing example is combined with the method 400, the foregoing example may be summarized as follows: The extended task includes a third extended task and a fourth extended task, and the controlling execution of the extended task includes: controlling the third extended task and the fourth extended task to be executed based on preset execution logic.

It may be understood that the third extended task (or the fourth extended task) and the first extended task or the second extended task may be a same extended task, or may be different extended tasks.

In some possible implementations, preset duration and a preset quantity of times are set for the extended task. If no execution result is returned after execution duration of the extended task exceeds the preset duration, the SM re-controls execution of the extended task. For example, the execution duration of the extended task may start from a moment at which the SM sends an extended task execution notification (for example, an arbitration processing notification, a pre-processing notification, or a post-processing notification) to the service node. For example, that the SM re-controls execution of the extended task may include: The SM re-sends the extended task execution notification to the related service node. In some possible implementations, when a quantity of times of re-executing the extended task is greater than or equal to the preset quantity of times, and no information related to the execution result is received within the preset duration, it is considered that the extended task fails to be executed. For example, the preset duration may be 3 seconds, or may be other duration. The preset quantity of times may be 3 or may be another quantity of times. It may be understood that, in the intelligent driving system, reliability and stability need to be ensured for task execution, that is, a task should be executed as much as possible within a given time. If execution time of a task is too long and there is no monitoring, the entire intelligent driving system may be blocked. The preset duration and the preset quantity of times are set for the extended task, so that the SM starts re-execution of the extended task. This improves robustness and reliability of system running as much as possible.

When the foregoing example is combined with the method 400, the foregoing example may be summarized as follows: When the execution result is not received within the preset duration, the extended task is controlled to be re-executed. Further, when a quantity of times of executing the extended task is greater than or equal to the preset quantity of times, it is determined that the extended task fails to be executed.

It should be noted that, in the state management method provided in this embodiment of this application, registration of an extended task is supported in any state switching process. In this embodiment of this application, state switching of the service node may be understood as state switching of a function group associated with the service node. For example, the intelligent driving system includes function groups MachineState and Access. The function group MachineState is configured with Startup and Update states, and a state is switched from MachineState.Startup to MachineState.Update. The function group Access is configured with an Off state or a Running state, and a state is changed, that is, Access.Off is switched to Access.Running. In this case, arbitration processing tasks, pre-processing tasks, and post-processing tasks can be registered when MachineState.Startup is switched to MachineState.Update and Access.Off is switched to Access.Running. It may be understood that, because registration of an extended task may be performed for any state switching process, a user may define a complete state management service execution process based on an actual service requirement and a state of a function group.

According to the state management method provided in this embodiment of this application, an arbitration processing task, a pre-processing task, a state switching task, and a post-processing task are defined, to generalize and standardize a processing process of state management. The user is allowed to define or orchestrate the execution sequence and logic of extended tasks based on actual service requirements to meet requirements of different integrators. In addition, in a process of executing the extended task, timeout monitoring and timeout retry are set, so that reliability and certainty of execution of the extended task can be ensured. This improves development efficiency of a developer of an integrator and reliability of the intelligent driving system.

In embodiments of this application, unless otherwise stated or there is a logic conflict, terms and/or descriptions between embodiments are consistent and may be mutually referenced, and technical features in different embodiments may be combined into a new embodiment based on an internal logical relationship thereof.

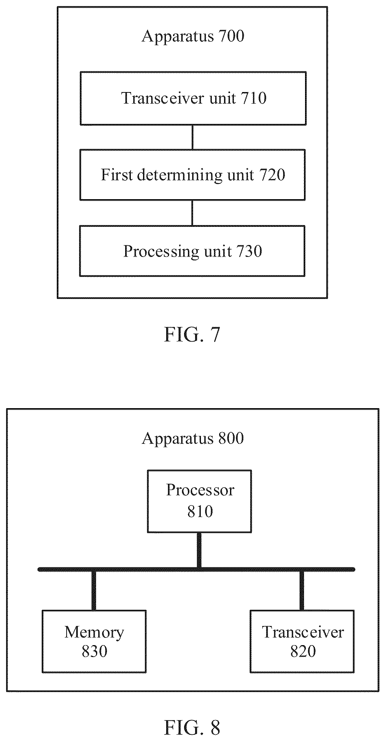

The foregoing describes in detail the methods provided in embodiments of this application with reference to FIG. 1 to FIG. 6. Apparatuses provided in embodiments of this application are described below in detail with reference to FIG. 7 and FIG. 8. It should be understood that descriptions of apparatus embodiments correspond to descriptions of method embodiment. Therefore, for content that is not described in detail, refer to the method embodiment. For brevity, details are not described herein again.

FIG. 7 is a block diagram of a state management apparatus 700 according to an embodiment of this application. The apparatus 700 includes a transceiver unit 710, a first determining unit 720, and a processing unit 730.

The apparatus 700 may include units configured to perform the methods in FIG. 4 and FIG. 5(a) to FIG. 5(d). In addition, the units in the apparatus 700 are respectively used to implement corresponding processes of the method embodiments in FIG. 4 and FIG. 5(a) to FIG. 5(d).

When the apparatus 700 is configured to perform the method 400 in FIG. 4, the transceiver unit 710 may be configured to perform S401 in the method 400, the first determining unit 720 may be configured to perform S402 in the method 400, and the processing unit 730 may be configured to perform S403 in the method 400.

Specifically, the transceiver unit 710 is configured to receive a state switching request sent by a first service node, where the state switching request includes a target state of the first service node. The first determining unit 720 is configured to determine information about an extended task based on the state switching request, where the extended task is associated with at least one other service node, and there is a dependency relationship between the at least one other service node and the target state. The processing unit 730 is configured to control an action of the first service node based on the information about the extended task, where the action includes switching to the target state or maintaining a current state.

In some possible implementations, the processing unit 730 is configured to: control execution of the extended task based on the information about the extended task; and control the action of the first service node based on an execution result of the extended task.

In some possible implementations, the at least one other service node includes a second service node, and the transceiver unit 710 is configured to: send first indication information to the second service node based on the information about the extended task, where the first indication information indicates the second service node to arbitrate whether the first service node is allowed to switch to the target state; and receive an arbitration result sent by the second service node. The execution result is the arbitration result, and the processing unit 730 is configured to: when the arbitration result is that the first service node is allowed to switch to the target state, control the first service node to switch to the target state; or when the arbitration result is that the first service node is not allowed to switch to the target state, control the first service node to maintain the current state.

In some possible implementations, the at least one other service node includes a third service node, and the transceiver unit 710 is configured to: send second indication information to the third service node based on the information about the extended task, where the second indication information indicates that the first service node is to switch to the target state, so that the third service node executes a first preset processing task; and receive an execution result that is of the first preset processing task and that is sent by the third service node. The execution result is the execution result of the first preset processing task, and the processing unit 730 is configured to: when the execution result of the first preset processing task is a success, control the first service node to switch to the target state; or when the execution result of the first preset processing task is a failure, control the first service node to maintain the current state.

In some possible implementations, the processing unit 730 is further configured to control re-execution of the extended task when the execution result is not received within preset duration.

In some possible implementations, the apparatus further includes a second determining unit, and the second determining unit is configured to: when a quantity of times of executing the extended task is greater than or equal to a preset quantity of times, determine that the extended task fails to be executed.

In some possible implementations, the extended task includes a first extended task and a second extended task, and the processing unit 730 is configured to control the first extended task and the second extended task to be executed in a preset execution sequence.

In some possible implementations, the extended task includes a third extended task and a fourth extended task, and the processing unit 730 is configured to control the third extended task and the fourth extended task to be executed based on preset execution logic.

In some possible implementations, the at least one other service node includes a fourth service node, and after the processing unit controls the first service node to switch to the target state, the transceiver unit 710 is further configured to: send third indication information to the fourth service node based on the information about the extended task, where the third indication information indicates that the first service node has switched to the target state, so that the fourth service node executes a second preset processing task.

In some possible implementations, the apparatus further includes a generation unit, and the transceiver unit 710 is further configured to: before receiving the state switching request sent by the first service node, receive registration information of each of the at least one other service node, where the registration information indicates an association relationship between each service node and the first service node; and the generation unit is configured to generate the information about the extended task based on the registration information.

In some possible implementations, the processing unit 730 is further configured to: before receiving the state switching request sent by the first service node, load the information about the extended task through a configuration file.

For example, the transceiver unit 710, the first determining unit 720, and the processing unit 730 may be disposed in the computing platform 150 shown in FIG. 2, or may be disposed in the middleware 322 shown in FIG. 3. For example, the second determining unit and the generation unit may alternatively be disposed in the computing platform 150 shown in FIG. 2, or may be disposed in the middleware 322 shown in FIG. 3.

It should be understood that division into the units of the foregoing apparatus is merely logical function division. During actual implementation, all or some of the units may be integrated into one physical entity, or may be physically separated. In addition, the units of the apparatus may be implemented in a form of software invoked by a processor. For example, the apparatus includes a processor, the processor is connected to a memory, the memory stores instructions, and the processor invokes the instructions stored in the memory, to implement any one of the foregoing methods or implement functions of the units of the apparatus. The processor is, for example, a general-purpose processor, for example, a CPU or a microprocessor, and the memory is a memory inside the apparatus or a memory outside the apparatus. Alternatively, the units of the apparatus may be implemented in a form of a hardware circuit, and functions of some or all of the units may be implemented by designing the hardware circuit. The hardware circuit may be understood as one or more processors. For example, in an implementation, the hardware circuit is an ASIC, and functions of some or all of the foregoing units are implemented by designing a logical relationship between elements in the circuit. For another example, in another implementation, the hardware circuit may be implemented by using a PLD. An FPGA is used as an example. The hardware circuit may include a large quantity of logic gate circuits, and a connection relationship between the logic gate circuits is configured through a configuration file, to implement functions of some or all of the foregoing units. All units of the foregoing apparatuses may be implemented in a form of software invoked by the processor, or all units may be implemented in a form of the hardware circuit, or some units may be implemented in a form of software invoked by the processor, and a remaining part may be implemented in a form of the hardware circuit.

Each unit in the foregoing apparatus may be one or more processors (or processing circuits) configured to implement the foregoing method, for example, a CPU, a GPU, an NPU, a TPU, a DPU, a microprocessor, a DSP, an ASIC, or an FPGA, or a combination of at least two of these processor forms.

In addition, all or some of the units of the apparatus may be integrated, or may be implemented independently. In an implementation, the units are integrated together and implemented in a form of a system-on-a-chip (system-on-a-chip, SoC). The SoC may include at least one processor, configured to implement any one of the foregoing methods or implement functions of the units in the apparatus. Types of the at least one processor may be different, for example, including a CPU and an FPGA, a CPU and an artificial intelligence processor, or a CPU and a GPU.

In a specific implementation process, operations performed by the transceiver unit 710, the first determining unit 720, and the processing unit 730 are performed by a same processor, or may be performed by different processors, for example, separately performed by a plurality of processors. In addition, operations performed by the second determining unit, the generation unit, the transceiver unit 710, the first determining unit 720, and the processing unit 730 may be performed by a same processor, or may be performed by different processors. In a specific implementation process, the one or more processors may be processors disposed in the computing platform 150 shown in FIG. 2, or the apparatus 700 may be a chip disposed in the intelligent driving device 100.

FIG. 8 is a block diagram of a state management apparatus according to an embodiment of this application. The state management apparatus 800 shown in FIG. 8 may include a processor 810, a transceiver 820, and a memory 830. The processor 810, the transceiver 820, and the memory 830 are connected through an internal connection path. The memory 830 is configured to store instructions. The processor 810 is configured to execute the instructions stored in the memory 830, to implement the state management methods in the foregoing embodiments. Optionally, the memory 830 may be coupled to the processor 810 through an interface, or may be integrated with the processor 810.

It should be noted that the transceiver 820 may include but is not limited to a transceiver apparatus, for example, an input/output interface (input/output interface), to implement communication between the apparatus 800 and another device or a communication network.

The memory 830 may be a read only memory (read only memory, ROM), a static storage device, a dynamic storage device, or a random access memory (random access memory, RAM).

The transceiver 820 uses a transceiver apparatus such as but not limited to a transceiver to implement communication between the apparatus 800 and another device or a communications network, to receive/send data/information used to implement the state management method in the foregoing embodiments.

In a specific implementation process, the apparatus 800 may be disposed in the computing platform 150 shown in FIG. 2, or the apparatus 800 may be disposed in the middleware 322 shown in FIG. 3.

An embodiment of this application further provides an in-vehicle computing platform. The in-vehicle computing platform includes the apparatus 700 or the apparatus 800.

An embodiment of this application further provides an intelligent driving device. The intelligent driving device includes the apparatus 700 or the apparatus 800, or may further include the in-vehicle computing platform.

In some possible implementations, the intelligent driving device may be a vehicle.

An embodiment of this application further provides a computer program product. The computer program product includes computer program code. When the computer program code is run on a computer, the computer is enabled to implement the state management method in the foregoing embodiments of this application.

An embodiment of this application further provides a computer-readable storage medium. The computer-readable medium stores computer instructions. When the computer instructions are run on a computer, the computer is enabled to implement the state management method in the foregoing embodiments of this application.

An embodiment of this application further provides a chip, including a circuit, configured to perform the state management method in the foregoing embodiments of this application.

In an implementation process, steps in the foregoing methods can be implemented by using a hardware integrated logical circuit in the processor, or by using instructions in a form of software. The method of the communication disclosed with reference to embodiments of this application may be directly performed by a hardware processor, or may be performed by using a combination of hardware in the processor and a software module. The software module may be located in a mature storage medium in the art, like a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It may be clearly understood by a person skilled in the art that, for the purpose of convenient and brief description, for a detailed working process of the foregoing system, apparatus, and unit, reference may be made to a corresponding process in the foregoing method embodiments. Details are not described herein again.

In the several embodiments provided in this application, it should be understood that the disclosed system, apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. **In** addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

**In** addition, functional units in embodiments of this application may be integrated into one processing unit, each of the units may exist alone physically, or two or more units may be integrated into one unit.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A state management method, comprising:
receiving a state switching request sent by a first service node, wherein the state switching request comprises a target state of the first service node;
determining information about an extended task based on the state switching request, wherein the extended task is associated with at least one other service node, and there is a dependency relationship between the at least one other service node and the target state; and
controlling an action of the first service node based on the information about the extended task, wherein the action comprises switching to the target state or maintaining a current state.

2. The method according to claim 1, wherein the controlling an action of the first service node based on the information about the extended task comprises:
controlling execution of the extended task based on the information about the extended task; and
controlling the action of the first service node based on an execution result of the extended task.

3. The method according to claim 2, wherein the at least one other service node comprises a second service node, and the controlling execution of the extended task comprises:
sending first indication information to the second service node based on the information about the extended task, wherein the first indication information indicates the second service node to arbitrate whether the first service node is allowed to switch to the target state; and
receiving an arbitration result sent by the second service node; and
the execution result is the arbitration result, and the controlling the action of the first service node based on an execution result of the extended task comprises:
when the arbitration result is that the first service node is allowed to switch to the target state, controlling the first service node to switch to the target state; or
when the arbitration result is that the first service node is not allowed to switch to the target state, controlling the first service node to maintain the current state.

4. The method according to claim 2, wherein the at least one other service node comprises a third service node, and the controlling execution of the extended task comprises:
sending second indication information to the third service node based on the information about the extended task, wherein the second indication information indicates that the first service node is to switch to the target state, so that the third service node executes a first preset processing task; and
receiving an execution result that is of the first preset processing task and that is sent by the third service node; and
the execution result is the execution result of the first preset processing task, and the controlling the action of the first service node based on an execution result of the extended task comprises:
when the execution result of the first preset processing task is a success, controlling the first service node to switch to the target state; or
when the execution result of the first preset processing task is a failure, controlling the first service node to maintain the current state.

5. The method according to any one of claims 2 to 4, wherein the method further comprises:
controlling re-execution of the extended task when the execution result is not received within preset duration.

6. The method according to claim 5, wherein the method further comprises:
when a quantity of times of execution of the extended task is greater than or equal to a preset quantity of times, determining that the extended task fails to be executed.

7. The method according to any one of claims 2 to 6, wherein the extended task comprises a first extended task and a second extended task, and the controlling execution of the extended task comprises:
controlling the first extended task and the second extended task to be executed in a preset execution sequence.

8. The method according to any one of claims 2 to 7, wherein the extended task comprises a third extended task and a fourth extended task, and the controlling execution of the extended task comprises:
controlling the third extended task and the fourth extended task to be executed based on preset execution logic.

9. The method according to any one of claims 1 to 8, wherein the at least one other service node comprises a fourth service node, and after the controlling the first service node to switch to the target state, the method further comprises:
sending third indication information to the fourth service node based on the information about the extended task, wherein the third indication information indicates that the first service node has switched to the target state, so that the fourth service node executes a second preset processing task.

10. The method according to any one of claims 1 to 9, wherein before the receiving a state switching request sent by a first service node, the method further comprises:
receiving registration information of each of the at least one other service node, wherein the registration information indicates an association relationship between each service node and the first service node; and
generating the information about the extended task based on the registration information.

11. The method according to any one of claims 1 to 9, wherein before the receiving a state switching request sent by a first service node, the method further comprises:
loading the information about the extended task through a configuration file.

12. A state management apparatus, comprising a transceiver unit, a first determining unit, and a processing unit, wherein
the transceiver unit is configured to receive a state switching request sent by a first service node, wherein the state switching request comprises a target state of the first service node;
the first determining unit is configured to determine information about an extended task based on the state switching request, wherein the extended task is associated with at least one other service node, and there is a dependency relationship between the at least one other service node and the target state; and
the processing unit is configured to control an action of the first service node based on the information about the extended task, wherein the action comprises switching to the target state or maintaining a current state.

13. The apparatus according to claim 12, wherein the processing unit is configured to:
control execution of the extended task based on the information about the extended task; and
control the action of the first service node based on an execution result of the extended task.

14. The apparatus according to claim 13, wherein the at least one other service node comprises a second service node, and the transceiver unit is configured to:
send first indication information to the second service node based on the information about the extended task, wherein the first indication information indicates the second service node to arbitrate whether the first service node is allowed to switch to the target state; and
receive an arbitration result sent by the second service node; and
the execution result is the arbitration result, and the processing unit is configured to:
when the arbitration result is that the first service node is allowed to switch to the target state, control the first service node to switch to the target state; or
when the arbitration result is that the first service node is not allowed to switch to the target state, control the first service node to maintain the current state.

15. The apparatus according to claim 13, wherein the at least one other service node comprises a third service node, and the transceiver unit is configured to:
send second indication information to the third service node based on the information about the extended task, wherein the second indication information indicates that the first service node is to switch to the target state, so that the third service node executes a first preset processing task; and
receive an execution result that is of the first preset processing task and that is sent by the third service node; and
the execution result is the execution result of the first preset processing task, and the processing unit is configured to:
when the execution result of the first preset processing task is a success, control the first service node to switch to the target state; or
when the execution result of the first preset processing task is a failure, control the first service node to maintain the current state.

16. The apparatus according to any one of claims 13 to 15, wherein the processing unit is further configured to:
control re-execution of the extended task when the execution result is not received within preset duration.

17. The apparatus according to claim 16, wherein the apparatus further comprises a second determining unit, and the second determining unit is configured to:
when a quantity of times of execution of the extended task is greater than or equal to a preset quantity of times, determine that the extended task fails to be executed.

18. The apparatus according to any one of claims 13 to 17, wherein the extended task comprises a first extended task and a second extended task, and the processing unit is configured to:
control the first extended task and the second extended task to be executed in a preset execution sequence.

19. The apparatus according to any one of claims 13 to 18, wherein the extended task comprises a third extended task and a fourth extended task, and the processing unit is configured to:
control the third extended task and the fourth extended task to be executed based on preset execution logic.

20. The apparatus according to any one of claims 12 to 19, wherein the at least one other service node comprises a fourth service node, and after the processing unit controls the first service node to switch to the target state, the transceiver unit is further configured to:
send third indication information to the fourth service node based on the information about the extended task, wherein the third indication information indicates that the first service node has switched to the target state, so that the fourth service node executes a second preset processing task.

21. The apparatus according to any one of claims 12 to 20, wherein the apparatus further comprises a generation unit, and the transceiver unit is further configured to:
before receiving the state switching request sent by the first service node, receive registration information of each of the at least one other service node, wherein the registration information indicates an association relationship between each service node and the first service node; and
the generation unit is configured to generate the information about the extended task based on the registration information.

22. The apparatus according to any one of claims 12 to 21, wherein the processing unit is further configured to: before receiving the state switching request sent by the first service node, load the information about the extended task through a configuration file.

23. A state management apparatus, comprising:
a memory, configured to store a computer program; and
a processor, configured to execute the computer program stored in the memory, so that the apparatus performs the method according to any one of claims 1 to 11.

24. An in-vehicle computing platform, comprising the apparatus according to any one of claims 12 to 23.

25. An intelligent driving device, comprising the in-vehicle computing platform according to claim 24.

26. A computer-readable storage medium, wherein the computer-readable storage medium stores instructions, and when the instructions are executed by a processor, the processor is enabled to implement the method according to any one of claims 1 to 11.

27. A chip, wherein the chip comprises a circuit, and the circuit is configured to perform the method according to any one of claims 1 to 11.
